Europäisches Patentamt

European Patent Office

Office européen des brevets

(19)

(11) Publication number: **0 010 798**
**B1**

# EUROPEAN PATENT SPECIFICATION

(12)

(45) Date of publication of patent specification: **26.05.82**

(51) Int. Cl.³: **A 23 J 3/00**

(21) Application number: **79200580.3**

(22) Date of filing: **11.10.79**

(54) **A process for producing a proteinaceous foodstuff with a fibrous structure.**

(30) Priority: **20.10.78 NL 7810505**

(43) Date of publication of application:
**14.05.80 Bulletin 80/10**

(45) Publication of the grant of the patent:
**26.05.82 Bulletin 82/21**

(84) Designated Contracting States:
**AT BE DE FR GB IT NL SE**

(56) References cited:
FR—A—1 505 075
FR—A—2 048 462
FR—A—2 048 855
FR—A—2 321 245
GB—A—1 105 904
GB—A—1 400 411
GB—A—1 412 801
US—A—3 488 770
US—A—3 845 228
US—A—3 953 611
US—A—3 968 268
US—A—4 000 323

(73) Proprietor: **UNILEVER NV**
**Burgemeester 's Jacobplein 1**
**NL-3000 DK Rotterdam (NL)**
(84) **BE DE FR IT NL SE AT**
(73) Proprietor: **UNILEVER PLC**
**Unilever House Blackfriars  P O Box 68**
**London EC4P 4BQ (GB)**
(84) **GB**

(72) Inventor: **Westdorp, Pieter**
**Deceased**
**NL-6941 AM Didam (NL)**
Inventor: **Walraven, Robert Marinus Wilhelm**
**Rembrandtstraat 6**
**NL-6921 BA Duiven (NL)**

(74) Representative: **Thomas, Susan Margaret et al,**
**Unilever PLC Patent Division PO Box 31, Salisbury**
**Square House Salisbury Square**
**London EC4P 4AN (GB)**

Courier Press, Leamington Spa, England.

# A process for producing a proteinaceous foodstuff with a fibrous structure

The invention relates to a process for producing a proteinaceous foodstuff with a fibrous structure, starting from a mixture of vegetable protein-containing material and water by extruding said mixture, shredding the extrudate, incorporating the shreds thus obtained in a protein binder and heat-setting the mixture thus obtained.

A similar process has been described in FR - A - 7,624,989. This process, however, displays a number of drawbacks. During the shredding step fines are formed which have to be recirculated. The formation of an unacceptable proportion of fines is due to evaporation of water from the extrudate as soon as it leaves the extrusion die, whereby the water content of the extrudate drops to 20% or less. Shredding such a relatively dry extrudate causes the disintegration of the extrudate into particles of far too small dimensions for these to be useful as a structure-imparting component. Moreover, the extrudate has a texture which lacks a certain resilience or toughness.

Applicants have found a process which alleviates to a great extent the above disadvantages.

A variety of other methods relating to the extrusion of vegetable protein containing materials is known. None of them however deals with the present problem encountered on shredding the extrudate prior to incorporation with a protein binder in order to achieve a fibrous structure. US - A - 3845228 for example describes the extrusion of a soy protein material accompanied by flash evaporation to form a cellular porous product. The toughness of the product and the throughput through the extruder are said to be enhanced by the presence of a small amount of lecithin in the extrusion mix. GB - A - 1,400,411 however relates to a process in which the extrudate is cut into chunks and dried and the mechanical strength and form retention on rehydration of these discrete pieces are said to simulate pieces of meat or vegetable more closely by suppressing the tendency of the extrudate to flash evaporate and form an expanded product. In US - A - 3488770 the toughness of an expanded, plexilamellar product which is cut into chunks and dried is said to be increased by the presence of one or more salts in the extrusion mix. In FR - A - 1505075 which describes a two step extrusion process particular operating conditions are described.

The process according to the present invention involves:

(a) producing a mixture including a vegetable protein-containing material having a protein content of at least 25%, water, and an effective proportion of an edible agent imparting toughness to the protein material;

(b) extruding said mixture;

(c) shredding said extrudate;

(d) incorporating the shreds in a protein binder;

(e) heat-setting the mixture consisting of binder and shreds;

characterised in that

(a) the mixture produced includes 30—50 weight % water, 0.5—8 weight % lipids and a hydrophilic emulsifier having an HLB value greater than 8; and

(b) extrusion of the mixture takes place such that the extrudate obtained has a moisture content of at least 30 weight %.

The vegetable protein-containing material in step (a) preferably comprises 50—80 wt % of the mixture and may consist of material originating from oleaginous seeds such as rapeseed-, cottonseed- or soya meal and the like, which has been defatted by extraction with an organic solvent such as hexane. It is very useful to use a protein concentrate which is a meal which has further been refined by extraction with a polar solvent, such as a mixture of ethanol and water, whereby sugars and other undesirable components are removed.

The vegetable protein-containing material may partly consist of a protein isolate which is usually produced by precipitation of protein from an aqueoous suspension of meal at the isoelectric point of the protein.

In the process according to the invention a soya protein concentrate or soya meal is preferably used.

The toughening agent to be incorporated in the mixture in step (a) comprises a calcium salt such as a calcium chloride or calcium lactate in a proportion of at least 0.05 and preferably 1—3 wt % and/or a sufficient proportion of an acid such as citric acid, lactic acid or sulphuric acid to achieve a pH in the mixture which is approximately equal to the isoelectric point of the protein present therein. When soya protein is present the proportion of acid to be used should be such as to achieve a pH of about 5.0.

Step (b) of the process according to the invention can be carried out using a conventional plastic extruder such as a Wenger X20 or X200. Extrusion is usually carried out at a temperature ranging from 110—165°C at a pressure ranging from 5 to 50 bar.

The moisture content of the extrudate being critical, it is essential to carefully select the water content of the mixture in step (a) and the extrusion conditions. A way for obtaining an extrudate having a moisture content of at least 30% and preferably of at least 50% consists in preventing evaporation of water from the extrudate leaving the extrusion die by keeping the extrudate immediately after it is leaving the extrusion die under superatmospheric pressures until its temperature sufficiently drops to a value at which under atmospheric pressure water does not evaporate quickly enough to render the extrudate unuseful.

A simpler way of achieving the desired moisture content in excess of 30 wt % in the extrudate consists in contacting the extrudate with water, for instance by spraying water on it, or by allowing the extrudate to hydrate in a vessel containing a sufficient amount of water. The temperature of the water may vary from 4 to 100°C. Although hydration is quicker at the higher temperatures of this range, for practical reasons it is preferred under conditions prevailing in a factory to use tap water.

Applicants have surprisingly found that hydration rates are improved by the incorporation in the mixture to be extruded of an efficient proportion of the hydrophilic emulsifier, which means an emulsifier having an HLB value (hydrophilic/lyophilic balance) of at least 8. Such emulsifiers are well-known commercial products and are described in "Emulsion", Paul Becher, Reinhold Publishing Corporation 1957, Chapter 6.

Useful examples of such emulsifiers are lecithin, sodiumstearoyl lactylate and sucrose monopalmitate.

The useful proportion of the emulsifier can be established in each particular case. In most instances a proportion ranging from 1 to 4 wt % will suffice.

The preferred emulsifier is lecithin. It is believed that lecithin at a level of 1—4 wt % offsets the hydrophobic action of the fat incorporated as a lubricant in the mixture to be extruded.

Lecithin can be added as a powder to the mixture. Preferably a mixture of lecithin and soyabean oil in a proportion of preferably 9:1, which has a relatively low viscosity, is sprayed on the mixture. Lecithin can be used to replace at least part of the lipids used in the mixture to be extruded as an extrusion aid. Applicants have established that the use of lecithin allowed hydration values of 100—300% (subject to the shape and dimensions of the extrudate) to be achieved within 5 minutes in cold tap water. The hydration values indicate the percentage of water absorbed by the extrudate based on the weight of the extrudate.

In the process according to the invention the extrudate is shredded in an apparatus exerting shearing forces, such as a Pallman or Eirich mill. The clearance between the rotating plates of the apparatus is chosen to be such that shreds of the desired dimensions are obtained. For producing meat substitutes shreds having a thickness of at least 0.2 mm and preferably 0.3—1 mm and a length of at least 2 mm and preferably 4—25 mm, are produced.

The binder in which the shreds are incorporated contains fats and proteins. Preferably a binder is used which comprises 10—50% fat, 3—20% protein, 1—10% potato pulp as a rehydration aid and water up to 100%. The fat may consist of vegetable and/or animal fats such as soyabean oil, cottonseed oil, sunflower oil, lard and tallow.

The protein may consist of vegetable and/or animal proteins such as soy protein, rapeseed protein or meat proteins.

The mixture consisting of binder and shreds is subsequently shaped into the desired form and heated at a temperature which is sufficiently high to set the protein. Mostly a temperature from 60—120°C will be adequate. The heat-set product is subsequently cut to the desired dimensions and is optionally dried to a moisture content of e.g. 3—6%. The product is eminently suitable for use in dry meals, soups and filled sauces, particularly of the instant-type.

The invention will now be illustrated in the following Examples.

Comparative Example I

A mixture of the following composition was produced:

|  | % |
|---|---|
| defatted soya meal | 60 |
| water | 35 |
| fat | 2 |
| calcium chloride | 0.5 |
| flavouring substances | 2.5 |

This mixture was fed into a Wenger extruder type X20 and was extruded at 130°C.

The moisture content of the extrudate was raised to 50% by spraying water of 90°C on it.

Hydration was completed after 5 minutes.

The hydrated extrudate was shredded in a Pallman apparatus in which the clearance between the rotating plates was about 3.5 mm, to obtain shreds of a thickness ranging from 0.2—1 mm and of a length ranging from 4—25 mm.

The proportion of fines was almost nil.

A binder of the following composition was prepared.

|  | % |
|---|---|
| soya protein isolate | 5 |
| meat protein | 5 |
| fat | 30 |
| water | 58 |
| flavouring substances | 2 |

1 Part of shreds was mixed with 2 parts of binder. A plank was formed from this mixture. The plank was heated at 100°C to coagulate the protein. The heated plank was subsequently cut into dice of 8×12×25 mm which were finally air-dried to a moisture content of 5 wt %. The dice were incorporated in a dry meal composition. On rehydration the dice were found to have excellent chewability and fibrosity similar to real meat.

Comparative Example II

The procedure outlined in Example I was repeated, using instead of calcium chloride a proportion of citric acid sufficient to achieve a pH of about 5.0.

The dice obtained had an excellent texture and the proportion of fines formed during shredding was negligible.

Comparative Examples III and IV

The procedure outlined in Examples I and II was repeated but using an extrudate having a moisture content of 70%.

The results were as satisfactory as in the previous Examples.

The following Examples embodying the present invention illustrate the effect of the use of specific emulsifiers on the hydration properties of the extrudate.

Examples V—VIII

Examples I to IV were repeated, using 3% of a lecithin powder (HLB=14). The extrudates were all hydrated in cold tap water. Within 5 minutes a hydration percentage of approximately 120% was achieved.

Examples IX—XII

Examples I to IV were repeated, using 1.5% of a native mixture of soya lecithin consisting of 90% lecithin and 10% soyabean oil. The extrudates were all hydrated in cold tap water. Within 5 minutes a hydration percentage of approximately 170% was achieved.

Example XIII

The procedure outlined in Example I was repeated, using a sodium-stearoyl lactylate (HLB 12). A hydration percentage of the extrudate of approximately 105% was achieved within 5 minutes in cold tap water.

Example XIV

The procedure outlined in Example I was repeated, using 3% sucrose monopalmitate (HLB 12). A hydration percentage of the extrudate of approximately 80% was achieved within 5 minutes in cold tap water.

Comparative Examples XV and XVI

The procedure outlined in Example I was repeated, while hydration was carried out in cold tap water. The hydration percentage obtained after 5 minutes was insufficient. The procedure outlined in Example I was repeated, using sorbitan monostearate (HLB 5).

The hydration percentage obtained after 5 minutes in cold tap water was 40%, which is considerably lower than the percentage obtained when an emulsifier having an HLB value >8 was used.

## Claims

1. A process for producing a foodstuff with a fibrous structure which comprises:

(a) producing a mixture including a vegetable protein-containing material having a protein content of at least 25%, water, and an effective proportion of an edible agent imparting toughness to the protein material;

(b) extruding said mixture;

(c) shredding said extrudate;

(d) incorporating the shreds in a protein binder;

(e) heat-setting the mixture consisting of binder and shreds

characterised in that

(a) the mixture produced includes 30—50 weight % water; 0.5—8 weight % lipids and a hydrophilic emulsifier having an HLB value greater than 8; and

(b) extrusion of the mixture takes place such that the extrudate obtained has a moisture content of at least 30 weight %.

2. A process according to Claim 1, in which a calcium salt is used as a toughening agent.

3. A process according to Claim 2, in which 1—3 weight % calcium chloride is used.

4. A process according to Claim 1, in which an acid is used as a toughening agent in a proportion sufficient to lower the pH to the isoelectric point of the protein present in the mixture.

5. A process according to any one of the preceding claims, in which an extrudate having a moisture content of at least 50 weight % is obtained by contacting the extrudate with a sufficient amount of water.

6. A process according to Claim 1, in which lecithin is used as the hydrophilic emulsifier having a HLB value greater than 8.

7. A process according to Claim 6, in which 1—4 weight % lecithin is incorporated in the mixture to be extruded.

8. A process according to Claim 7, in which a native lecithin consisting of a mixture of lecithin and soyabean oil (90/10 w/w) is used to replace part or whole of the proportion of lipids used as an extrusion aid.

9. A process according to any one of the preceding claims, in which the mixture is extruded at a temperature ranging from 110° to 165°C at a pressure ranging from 5 to 50 bar.

10. A process according to any one of the preceding claims, in which the extrudate is shredded to obtain shreds simulating meat fibres, having a thickness of 0.2 to 1 mm and a length of 2 to 25 mm.

11. A process according to any one of the preceding claims, in which defatted soyameal is used as the vegetable protein-containing material.

## Revendications

1. Procédé de préparation d'un produit alimentaire à structure fibreuse qui comprend:

(a) la préparation d'un mélange contenant une matière végétale protéique à une teneur en protéines d'au moins 25%, de l'eau et une proportion efficace d'un agent alimentaire conférant la ténacité à la matière protéique;

(b) l'extrusion de ce mélange;

(c) le déchiquetage du produit d'extrusion;

(d) l'incorporation du produit déchiqueté dans un liant protéique;

(e) la coagulation à la chaleur du mélange consistant en le liant et le produit déchiqueté,

caractérisé en ce que

(a) le mélange préparé contient de 30 à 50% en poids d'eau, de 0,5 à 8% en poids de lipides et un agent émulsionnant hydrophile présentant une valeur de HLB supérieure à 8, et

(b) on extrude le mélange dans des conditions telles que le produit d'extrusion obtenu présente une teneur en humidité d'au moins 30% en poids.

2. Procédé selon la revendication 1, dans lequel l'agent utilisé pour conférer la ténacité est un sel de calcium.

3. Procédé selon la revendication 2, dans lequel on utilise de 1 à 3% en poids de chlorure de calcium.

4. Procédé selon la revendication 1, dans lequel on utilise en tant qu'agent conférant la ténacité un acide en proportion suffisante pour abaisser le pH jusqu'au point isoélectrique de la protéine présente dans le mélange.

5. Procédé selon l'une quelconque des revendications qui précèdent, dans lequel on obtient un produit d'extrusion présentant une teneur en humidité d'au moins 50% en poids en mettant le produit d'extrusion en contact avec de l'eau en quantité suffisante.

6. Procédé selon la revendication 1 dans lequel on utilise la lécithine et tant qu'agent émulsionnant hydrophile présentant une valeur HLB supérieure à 8.

7. Procédé selon la revendication 6 dans lequel on incorpore de 1 à 4% en poids de lécithine dans le mélange à extruder.

8. Procédé selon la revendication 7, dans lequel on utilise une lécithine naturelle consistant en un mélange de lécithine et d'huile de soya (90:10 en poids) pour remplacer en totalité ou en partie la proportion de lipides utilisée comme produit auxiliaire d'extrusion.

9. Procédé selon l'une quelconque des revendications qui précèdent dans lequel le mélange est extrudé à une température allant de 110 à 165°C sous une pression allant de 5 à 50 bars.

10. Procédé selon l'une quelconque des revendications qui précèdent dans lequel le produit d'extrusion est déchiqueté de manière à donner des morceaux déchiquetés ressemblant aux fibres de viande et présentant une épaisseur de 0,2 à 1 mm et une longueur de 2 à 25 mm.

11. Procédé selon l'une quelconque des revendications qui précèdent dans lequel on utilise en tant que matière végétale contenant des protéines de la farine de soya déshuilée.

**Patentansprüche**

1. Verfahren zur Herstellung eines Nahrungsmittels mit einer Faserstruktur, das umfaßt:

(a) Herstellung einer Mischung, bestehend aus einem ein pflanzliches Protein-enthaltenden Material mit einem Proteingehalt von wenigstens 25%, Wasser und einem wirksamen Anteil eines eßbaren Mittels, welches dem Proteinmaterial Zähigkeit verleiht;

(b) das Extrudieren der genannten Mischung;

(c) das Zerkleinern dieses Extrudats;

(d) das Einverleiben der Stückchen oder Schnitzel in ein Proteinbindemittel;

(e) das Hitzeverfestigen der aus dem Bindemittel und den Schnitzeln bestehenden Mischung,

dadurch gekennzeichnet, daß

(a) die hergestellte Mischung 30 bis 50 Gew.% Wasser, 0,5 bis 8 Gew.% Lipide und ein hydrophiles Emulgiermittel mit einem HLB-Wert von oberhalb 8 enthält, und

(b) das Extrudieren der Mischung in solcher Weise stattfindet, daß das erhaltene Extrudat einen Feuchtigkeitgehalt von wenigstens 30 Gew.% aufweist.

2. Verfahren nach Anspruch 1, worin ein Kalziumsalz als mittel zur Erteilung einer Zähigkeit verwendet wird.

3. Verfahren nach Anspruch 2, worin 1 bis 3 Gew.% Kalziumchlorid verwendet werden.

4. Verfahren nach Anspruch 1, worin eine Säure als Mittel zur Erteilung einer Zähigkeit in einer ausreichenden Menge verwendet wird, um den pH-Wert auf den isoelektrischen Punkt des in der Mischung vorhandenen Proteins zu erniedrigen.

5. Verfahren nach einem der Ansprüche 1 bis 4, worin ein Extrudat mit einem Feuchtigkeitsgehalt von wenigstens 50 Gew.% durch in-Berührung-bringen des Extrudats mit einer ausreichenden Menge Wasser erhalten wird.

6. Verfahren nach Anspruch 1, worin Lecithin als hydrophiles Emulgiermittel mit einem HLB-Wert von oberhalb 8 verwendet wird.

7. Verfahren nach Anspruch 6, worin 1 bis 4 Gew.% Lecithin der zu extrudierenden Mischung einverleibt werden.

8. Verfahren nach Anspruch 7, worin ein natives Lecithin, bestehend aus einer Mischung von Lecithin und Sojabohnenöl (90/10 Gew./Gew.) zum teilweisen oder vollständigen Ersatz des Anteils an Lipiden, verwendet als Extrudierhilfsmittel, verwendet wird.

9. Verfahren nach einem der Ansprüche 1 bis 8, worin die Mischung bei einer Temperatur im Bereich von 110 bis 165°C bei einem Druck im Bereich von 5 bis 50 bar extrudiert wird.

10. Verfahren nach einem der Ansprüche 1 bis 9, worin das Extrudat zur Gewinnung von Schnitzeln oder Stückchen verkleinert wird, welche Fleischfasern mit einer Dicke von 0,2 bis 1 mm und einer Länge von 2 bis 25 mm ähnlich sind.

**0010798**

11. Verfahren nach einem der Ansprüche 1 bis 10, worin entfettetes Sojamehl als pflanzliches Protein enthaltendes Material verwendet wird.